# EUROPEAN PATENT APPLICATION

(11) **EP 4 276 587 A1**
(43) Date of publication of application: **15.11.2023**
(21) Application number: 22752088.9
(22) Date of filing: 18.01.2022
(51) Int. Cl.: G06F 3/02

(54) **ELECTRONIC DEVICE, AND LINK BAR AND MANUFACTURING METHOD THEREFOR**

(30) Priority: 09.02.2021 CN 202110180405
(71) Applicant: Huawei Technologies Co., Ltd., Shenzhen, Guangdong 518129 (CN)
(72) Inventor: PAN, Chunjiao, Shenzhen, Guangdong 518129 (CN); WANG, Bo, Shenzhen, Guangdong 518129 (CN); GAO, Yueli, Shenzhen, Guangdong 518129 (CN); ZHANG, Cheng, Shenzhen, Guangdong 518129 (CN); CHEN, Shitao, Shenzhen, Guangdong 518129 (CN)
(74) Representative: Isarpatent
(86) International application number: PCT/CN2022/072528
(87) International publication number: WO 2022/170926

(57) **Abstract**

Embodiments of this application provide an electronic device, a linkbar, and a preparation method thereof. A key of the electronic device includes a resin linkbar. In this way, an objective of keyboard shock absorption and noise reduction is achieved, a problem of keyboard noise is improved, and a problem that noise is large when a keyboard is used because a linkbar collides with an assembly groove of a keyboard substrate and resonance occurs in a use process of an existing keyboard is resolved.

## Description

This application claims priority to Chinese Patent Application No. 202110180405.8, filed with the China National Intellectual Property Administration on February 9,2021 and entitled "ELECTRONIC DEVICE, LINKBAR, AND PREPARATION METHOD THEREOF", which is incorporated herein by reference in its entirety.

### TECHNICAL FIELD

Embodiments of this application relate to the field of terminal technologies, and in particular, to an electronic device, a linkbar, and a preparation method thereof.

### BACKGROUND

A tablet personal computer (Personal Computer, PC) is a small and portable terminal device. In a hardware device of the tablet PC, a keyboard is one of important input ports, and performance of the keyboard greatly affects user experience.

Currently, in a keyboard of a tablet PC, to resolve a problem of uneven force exerted on a large-sized key (for example, a shift key, an enter key, or a space key) during use, a pair of linkbars (Linkbar) are usually installed under a keycap of the large-sized key. The linkbar is usually made of stainless steel. Two ends of the linkbar are rotatably connected to assembly grooves provided on a substrate of the keyboard, and the linkbar can transfer force, to ensure that even force is exerted on the keycap when it is tapped, so that a whole plane of the keycap moves almost simultaneously.

However, during tapping the keyboard, because the linkbar collides with the assembly groove on the substrate of the keyboard, noise is generated. In addition, when the tablet PC plays music through a loudspeaker, resonance occurs between the linkbar and the substrate of the keyboard, and finally, noise is large in a use process of the keyboard. Therefore, how to overcome a keyboard resonance noise problem has become a problem that needs to be urgently resolved for the tablet PC.

### SUMMARY

Embodiments of this application provide an electronic device, a linkbar, and a preparation method thereof, to achieve an objective of keyboard shock absorption and noise reduction, improve a problem of keyboard noise, and resolve a problem that noise is large when a keyboard is used because a linkbar collides with an assembly groove of a keyboard substrate and resonance occurs in a use process of an existing keyboard.

A first aspect of embodiments of this application provides an electronic device, including at least a keyboard apparatus. The keyboard apparatus includes a keyboard substrate and a plurality of keys disposed on the keyboard substrate.

Each key includes a keycap and at least one rebound component. The rebound component is separately connected to the keycap and the keyboard substrate.

At least some keys in the plurality of keys further include at least one linkbar. Two ends of each linkbar are respectively rotatably connected to assembly grooves provided on the keyboard substrate, and the linkbar is rotatably connected to the keycap.

The linkbar is a resin linkbar.

According to the electronic device provided in embodiments of this application, the linkbar is disposed to be the resin linkbar. In this way, a collision between metal is changed to a collision between resin and metal, thereby reducing noise generated by a collision between the linkbar and an inner wall of the assembly groove, achieving an objective of keyboard shock absorption and noise reduction, improving a keyboard noise problem, and resolving a problem that noise is large when a keyboard is used because a linkbar collides with an assembly groove of a keyboard substrate and resonance occurs in a use process of an existing keyboard.

In addition, when the resin linkbar is used as the linkbar, structures of the keyboard substrate, the rebound component, and the keycap in the keyboard apparatus are not changed. Therefore, in embodiments of this application, in addition to replacing a material of the linkbar, an objective of shock absorption and noise reduction is achieved without changing a structure of the keyboard apparatus. In addition, a linkbar process and assembly can be continuously produced and assembled, thereby improving assembly and production efficiency.

In addition, a weight of the resin linkbar is lower than that of stainless steel, so that an overall weight of the keyboard is reduced, which facilitates a light weight of the electronic device.

In a possible implementation, the resin linkbar includes the following materials in parts by weight: 30 to 50 parts of carbon fibers, 20 to 40 parts of resin materials, 3 to 10 parts of reinforcement materials, 5 to 15 parts of abrasion-resistant agents, and 5 to 12 parts of adhesives. In this way, the prepared linkbar meets requirements of high rigidity, high toughness, and high abrasion resistance, so that the resin linkbar can replace the stainless steel linkbar.

In a possible implementation, the resin materials are one or more of polyether ether nitrile, polyether ether ketone, polyimide, polycarbonate, fluorine-containing resin, and aromatic heterocyclic resin.

In a possible implementation, the carbon fibers are one or more of short carbon fibers, long carbon fibers, glass fibers, and carbon nanotubes.

In a possible implementation, the adhesives are one or more of an epoxy resin adhesive, an acrylic resin adhesive, a urea-formaldehyde resin adhesive, a polyimide adhesive, and a furan resin adhesive.

In a possible implementation, the reinforcement agents are one or more of carbon black, nano titanium powder, and nano zinc oxide.

In a possible implementation, the abrasion-resistant agents are one or more of polytetrafluoroethylene (Polytetrafluoroethylene, PTFE), nylon, polyurea, and epoxy resin.

A second aspect of this application provides a linkbar preparation method. The method includes:
providing carbon fibers, resin materials, reinforcement materials, abrasion-resistant agents, and adhesives; and
preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process.

In a possible implementation, when the carbon fibers are long fibers, the preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process includes:
mixing 20 to 40 parts of the resin materials, 3 to 10 parts of the reinforcement materials, 5 to 15 parts of the abrasion-resistant agents, and 5 to 12 parts of the adhesives to prepare a prepreg;
immersing 30 to 50 parts of the carbon fibers into the prepreg to make a prepreg belt; and
hot-pressing the prepreg belt for a preset time period at a temperature of 240°C to 300°C to obtain the linkbar.

In a possible implementation, when the carbon fibers are short fibers, the preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process includes:
mixing 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives; and
hot-pressing a mixture of the carbon fibers, the resin materials, the reinforcement materials, the abrasion-resistant agents, and the adhesives for a preset time period at a temperature of 240°C to 300°C to obtain the linkbar.

A third aspect of this application provides a linkbar prepared by using the foregoing preparation method.

### BRIEF DESCRIPTION OF DRAWINGS

FIG. 1 is a schematic diagram of a three-dimensional structure of an electronic device according to an embodiment of this application;
FIG. 2 is a schematic exploded view of a keyboard apparatus in an electronic device according to an embodiment of this application;
FIG. 3 is a schematic exploded view of a key on an electronic device according to an embodiment of this application;
FIG. 4 is an enlarged schematic exploded view of the key in FIG. 3;
FIG. 5 is a side view of a key on an electronic device according to an embodiment of this application;
FIG. 6 is a schematic diagram of assembling a linkbar and a keycap of an electronic device according to an embodiment of this application;
FIG. 7A is a flowchart of a linkbar preparation method according to an embodiment of this application;
FIG. 7B is a flowchart of a linkbar preparation method according to an embodiment of this application;
FIG. 8 is a schematic diagram of four points of a key on which a linkbar is installed in an electronic device and stress on the four points according to an embodiment of this application;
FIG. 9 shows displacement decrease curves of the four points on the key after force is exerted on point A in FIG. 8;
FIG. 10 shows displacement decrease curves of four points on an existing key with a stainless steel linkbar after force is exerted on the key at point A,
FIG. 11 shows displacement decrease curves of a key with a resin linkbar and an existing key with a stainless steel linkbar after force is separately exerted on the two at point B according to an embodiment;
FIG. 12 shows displacement decrease curves of a key with a resin linkbar and an existing key with a stainless steel linkbar after force is separately exerted on the two at point C according to an embodiment; and
FIG. 13 shows displacement decrease curves of a key with a resin linkbar and an existing key with a stainless steel linkbar after force is separately exerted on the two at point D according to an embodiment.

Descriptions of reference numerals:
100: electronic device; 10: display screen; 20: host body; 21: installation part; 30: keyboard apparatus;
31, 31a, 31b, and 31c: keys; 311: keycap; 3111: clamping block; 3112: clamping groove; 3113: back surface;
312: rebound component; 3121: upper scissors foot; 3122: lower scissors foot; 32: keyboard substrate; 32a: contact;
321a and 321b: assembly grooves; 321c: separator; 321d: assembly board; 322: clamping member; 323: circuit board;
324: metal bottom plate; 33: linkbar; 331a: first end; and 331b: second end.

### DESCRIPTION OF EMBODIMENTS

Embodiments of this application provides an electronic device. The electronic device may be a mobile terminal, a fixed terminal, or a foldable device that has a keyboard, such as a tablet computer, a notebook computer, an ultra-mobile personal computer (ultra-mobile personal computer, UMPC), a handheld computer, a walkie-talkie, a netbook, a POS machine, or a personal digital assistant (personal digital assistant, PDA). Alternatively, the electronic device may be a keyboard.

In embodiments of this application, an example in which a notebook computer is the foregoing electronic device is used for description.

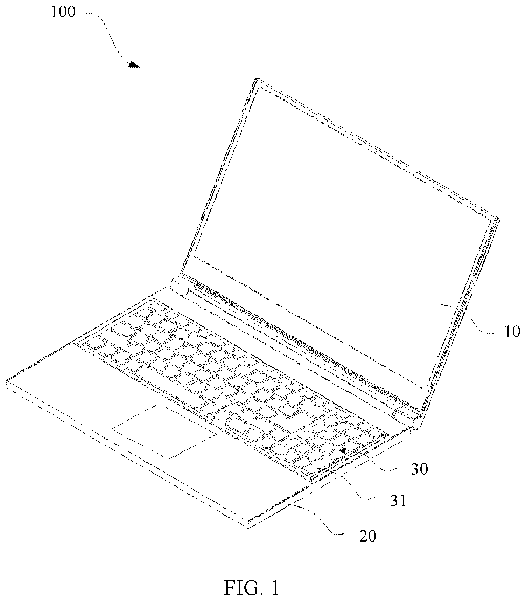

FIG. 1 is a schematic diagram of a three-dimensional structure of a notebook computer. Refer to FIG. 1. An electronic device 100 may include a display screen 10 and a host body 20. The display screen 10 is rotatably connected to the host body 20. For example, the display screen 10 may be connected to the host body 20 by using a rotating shaft; or the display screen 10 may be rotatably connected to the host body 20 by using a hinge structure. Alternatively, in some examples, the display screen 10 and the host body 20 may be devices independent of each other. For example, the display screen 10 and the host body 20 are detachable. When being used, the display screen 10 is placed on the host body 20. After being used, the display screen 10 and the host body 20 may be separated from each other.

It should be noted that, to achieve a display effect of the display screen 10, the display screen 10 is electrically connected to the host body 20. For example, the display screen 10 may be electrically connected to the host body 20 by using a contact, or the display screen 10 is electrically connected to the host body 20 by using a flexible printed circuit (Flexible Printed Circuit, FPC), or the display screen 10 is electrically connected to the host body 20 by using a conducting wire.

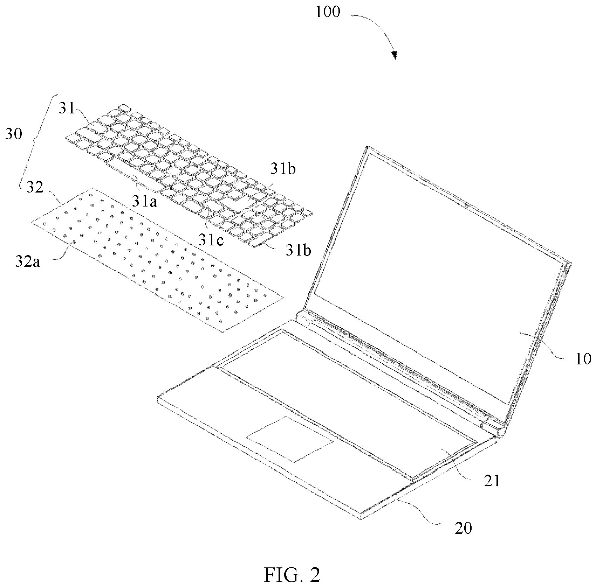

Refer to FIG. 1. To implement input of the electronic device, the electronic device 100 may further include a keyboard apparatus 30. The keyboard apparatus 30 may be disposed on the host body 20. For example, as shown in FIG. 2, there is an installation part 21 on the host body 20, the keyboard apparatus is disposed on the installation part 21 of the host body 20, the keyboard apparatus 30 is electrically connected to a control unit in the host body 20, and the keyboard apparatus 30 is used as an input device of the electronic device 100.

FIG. 2 shows a structure of the keyboard apparatus 30. Refer to FIG. 2. The keyboard apparatus 30 may include a keyboard substrate 32 and a plurality of keys 31 disposed on the keyboard substrate 32. For a type of the key 31, reference may be made to an existing keyboard. For example, the plurality of keys 31 include a numeric key, a function key (such as a Delete key or an Insert key), a letter key, and the like. Refer to FIG. 2. Some keys 31 are small in size, and some keys 31 are large in size, for example, a large-sized key such as a space key 31a, an Enter key 31b, or a Shift key 31c.

To achieve an input function of the key 31, as shown in FIG. 2, a contact 32a is disposed on the keyboard substrate 32, and the contact 32a is triggered after the key 31 is pressed, to achieve the input function.

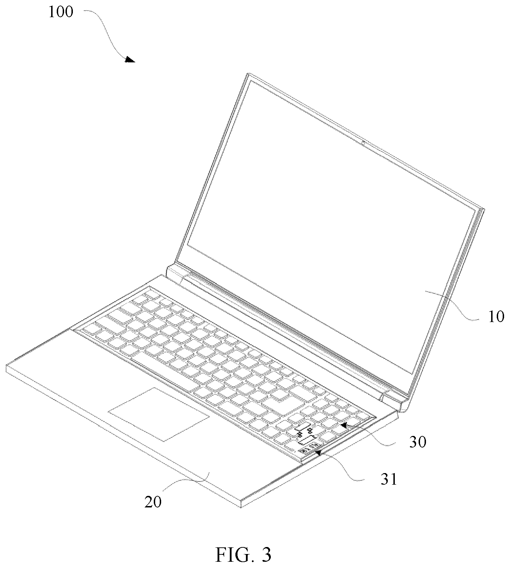

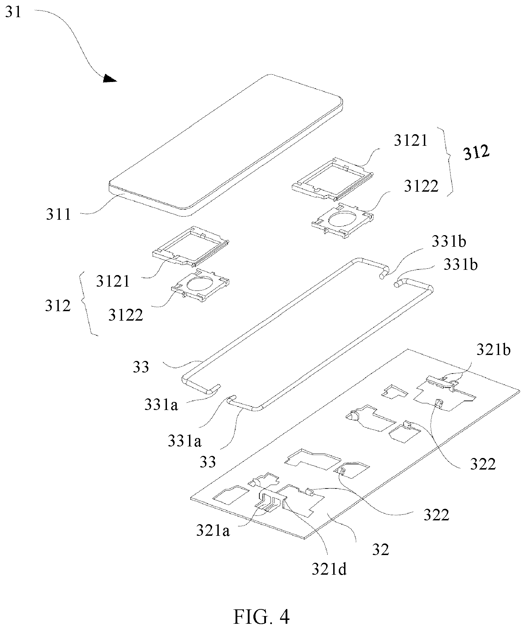

FIG. 3 is a schematic diagram of splitting one of Enter keys 31b of an electronic device 100. FIG. 4 is an enlarged schematic diagram of splitting the key 31 in FIG. 3. It should be noted that, a keyboard substrate 32 shown in FIG. 4 is a part of a keyboard substrate 32 corresponding to one of keys 31, that is, FIG. 4 shows only a part of a keyboard substrate 32. FIG. 4 is specifically described by using one of Enter keys 31b in FIG. 2 as an example.

Refer to FIG. 4. Each key 31 may include a keycap 311 and at least one rebound component 312. For example, in FIG. 4, there are two rebound components 312. Certainly, in some examples, there may also be one or more rebound components 312. The rebound component 312 is separately connected to the keycap 311 and the keyboard substrate 32. The rebound component 312 is configured to drive the keycap 311 to reset after a finger presses the keycap 311 and then leaves the keycap 311.

In this embodiment of this application, as shown in FIG. 4, each rebound component 312 includes an upper scissors foot 3121 and a lower scissors foot 3122. The upper scissors foot 3121 and the lower scissors foot 3122 are intersected and rotatably connected. One end of the upper scissors foot 3121 and one end of the lower scissors foot 3122 are connected to the keyboard substrate 32, and the other end of the upper scissors foot 3121 and the other end of the lower scissors foot 3122 are connected to the keycap 311. In addition, the upper scissors foot 3121 and the lower scissors foot 3122 have elasticity. After the end of the upper scissors foot 3121 and the end of the lower scissors foot 3122 that are connected to the keycap 311 are compressed, and after external force is removed, the upper scissors foot 3121 and the lower scissors foot 3122 reset the keycap 311 depending on their own elasticity.

In this embodiment of this application, materials of the upper scissors foot 3121 and the lower scissors foot 3122 may be plastic. For a cooperation relationship between the upper scissors foot 3121 and the lower scissors foot 3122, refer to a scissors foot in an existing key.

The upper scissors foot 3121 and the lower scissors foot 3122 may be connected to the keyboard substrate 32 in a clamping manner. For example, as shown in FIG. 4, a clamping member 322 is disposed on the keyboard substrate 32, a buckle (not shown) is disposed on each of the upper scissors foot 3121 and the lower scissors foot 3122, and the upper scissors foot 3121 and the lower scissors foot 3122 are separately clamped to the clamping member 322 on the keyboard substrate 32 by using the buckle.

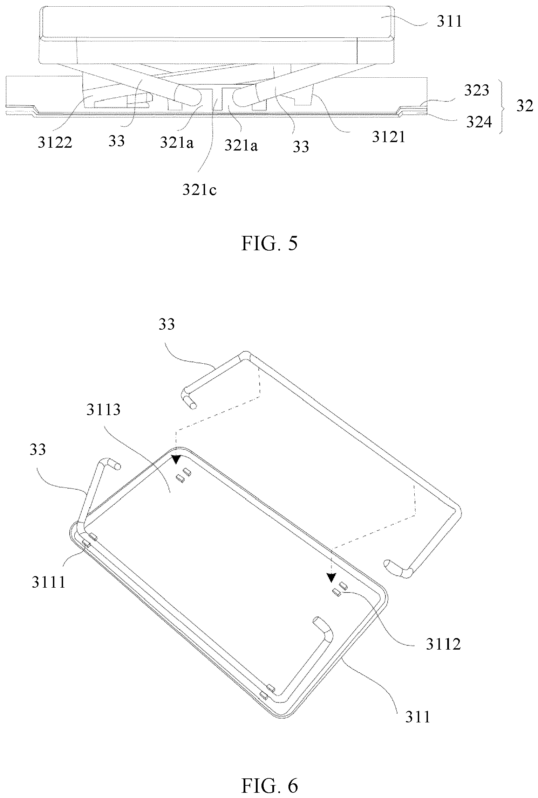

The upper scissors foot 3121 and the lower scissors foot 3122 may also be connected to the keycap 311 in a clamping manner. Certainly, in some examples, the upper scissors foot 3121 and the lower scissors foot 3122 may abut against the keycap 311. For example, one end of the upper scissors foot 3121 and one end of the lower scissors foot 3122 abut against a back surface 3113 of the keycap 311 (refer to FIG. 6 below).

In this embodiment of this application, to balance force exerted on a large-sized key 31 (a large sized key 31 such as a space key 31a, an Enter key 31b, or a Shift key 31c) during use, as shown in FIG. 4, at least some keys 31 in the plurality of keys 31 further include at least one linkbar 33. For example, the large-sized key 31 such as the space key 31a, the Enter key 31b, or the Shift key 31c in FIG. 2 further includes at least one linkbar 33, or when a size of each key 31 is large, each key 31 may also include at least one linkbar 33.

In this embodiment of this application, as shown in FIG. 4, there are two linkbars 33. Certainly, in some other examples, there may be one linkbar 33, or there may further be three linkbars 33. The following embodiments are specifically described by using two linkbars 33 as an example.

As shown in FIG. 4, two ends of each linkbar 33 are respectively rotatably connected to an assembly groove 321a and an assembly groove 321b that are disposed on the keyboard substrate 32. For example, as shown in FIG. 4, the assembly groove 321a and the assembly groove 321b are disposed on the keyboard substrate 32, a first end 331a of the linkbar 33 is rotatably connected in the assembly groove 321a (as shown in FIG. 5), and a second end 331b of the linkbar 33 is rotatably connected in the assembly groove 321b. The linkbar 33 may vertically rotate around the assembly groove 321a and the assembly groove 321b.

Refer to FIG. 5. When there are two linkbars 33, first ends 331a of the two linkbars 33 are respectively clamped in two assembly grooves 321a, where the two assembly grooves 321a are separated by a separator 321c. In this way, the first ends 331a of the two linkbars 33 do not interfere with each other or collide with each other when rotating in the assembly grooves 321a.

In this embodiment of this application, as shown in FIG. 5, the keyboard substrate 32 may include a metal bottom plate 324 and a circuit board 323. The circuit board 323 may be a printed circuit board (Printed circuit board, PCB) 323. The metal bottom plate 324 plays a supporting role. The contact 32a in FIG. 2 is specifically disposed on the circuit board 323, and the contact 32a is electrically connected to the circuit board. A protruding assembly board 321d (refer to FIG. 4) is disposed on the metal bottom plate 324. An opening is provided on the assembly board 321d to form the assembly groove 321a (321b). The assembly board 321d and the metal bottom plate 324 may be integrally formed, or the assembly board 321d may be fixed on the metal bottom plate 324 through clamping, welding, or a fastener.

As shown in FIG. 6, the linkbar 33 is rotatably connected to the keycap 311. For example, a clamping block 3111 is disposed on the back surface 3113 of the keycap 311, a clamping groove 3112 is defined between two opposite clamping blocks 3111, the linkbar 33 is clamped into the clamping groove 3112, and the linkbar 33 may rotate in the clamping groove 3112. Refer to FIG. 6. Two clamping grooves 3112 corresponding to each linkbar 33 are provided on the back surface of the keycap 311.

Certainly, in some examples, a quantity of clamping grooves 3112 includes but is not limited to two. By disposing the linkbar 33, when force is exerted on a specific position on the keycap 311, the entire keycap 311 may fall as a whole, thereby ensuring that even force is exerted on the keycap 311 during use.

The keycap 311 may be a plastic keycap, and the clamping block 3111 and the keycap 311 may be integrally formed, or the clamping block 3111 and the keycap 311 may be disposed in a manner of welding or clamping.

In the conventional technologies, a material of the linkbar 33 is usually a stainless steel material. In this way, it is ensured that the linkbar 33 is abrasion-resistant and has specific strength. The metal bottom plate 324 and the assembly board 321d are usually metal. When two ends of the linkbar 33 are rotated in the assembly groove 321a and the assembly groove 321b, in a use process, the linkbar 33 rotates around two ends (for example, refer to the first end 331a and the second end 331b of the linkbar 33 in FIG. 4) as the key 31 moves up and down. In this way, when the key 31 is tapped, the two ends of the linkbar 33 easily collide with a groove wall of the assembly groove 321a (321b), and noise is generated.

In addition, when a notebook computer plays music or a video, resonance easily occurs between the sound and the stainless steel linkbar 33, the metal bottom plate 324, and the assembly board 321d. In a resonance process, because the linkbar 33 is movable in the groove wall of the assembly groove 321a, the linkbar 33 collides with the groove wall of the assembly groove 321a during the resonance, and the noise is generated. Finally, noise of the electronic device 100 is large, which greatly affects use of a user, and reduces a satisfaction degree of the user with the electronic device 100.

Therefore, one solution is as follows: Wrap a flexible material on the linkbar 33 to perform shock absorption protection, for example, sleeve thermoplastic pipes on two ends of the linkbar 33. However, when the thermoplastic pipes are sleeved on the linkbar 33, the length of the thermoplastic pipes sleeved on the linkbar 33 is limited, and assemblies cannot be produced continuously. The thermoplastic pipes are usually sleeved manually, and an automation degree is low. In addition, after being sleeved on the linkbar 33, the thermoplastic pipe needs to be bent to form a shape of the linkbar 33 shown in FIG. 6. In this way, a stress concentration problem exists at a bending position, which easily causes deformation of the thermoplastic pipe, a fracture burr, and untightness between the thermoplastic pipe and the linkbar 33.

Another solution is as follows: Add shock absorption protection at positions at which the assembly groove 321a and the assembly groove 321b collide with the linkbar 33 up and down, for example, add buffer layers (for example, foam or Mylar films) to positions at which two ends of the linkbar 33 are in contact with the assembly groove 321a and the assembly groove 321b. However, in this way, gaps between the two ends of the linkbar 33 and the assembly groove 321a and the assembly groove 321b are reduced, the key 31 does not move smoothly up and down, and the user needs large force to tap the keyboard, or the key 31 is not flexible. In addition, a process of adding buffer layers between the two ends of the linkbar 33 and the assembly groove 321a and the assembly groove 321b is low in integration, and usually needs to be completed manually, resulting in low efficiency and high costs.

A third solution is as follows: The assembly board 321d (refer to FIG. 4) is made of a plastic material, so that inner walls of the assembly groove 321a and the assembly groove 321b formed in this way are both plastic. In this way, when the linkbar 33 moves up and down, a collision sound between the linkbar 33 and the plastic is reduced, and an effect of shock absorption and noise reduction is achieved when music or a video is played. However, because the metal bottom plate 324 is metal, while the assembly board 321d is plastic, when integral injection molding is performed between the two, bonding force at a junction between the metal bottom plate 324 and the assembly board 321d is small because the metal bottom plate 324 and the assembly board 321d are made of different materials. After the linkbar 33 moves up and down with the keycap 311, the assembly board 321d and the metal bottom plate 324 are easily layered.

To resolve the foregoing problem, in this embodiment of this application, a material of the linkbar 33 is changed to a resin material, that is, the linkbar 33 is a resin linkbar. In this way, collision between metal is converted into collision between resin and metal. Noise generated by the collision between resin and metal is far less than noise generated by the collision between metal. Therefore, in this embodiment of this application, a keyboard noise problem is improved, and an effect of shock absorption and noise reduction is achieved. In addition, when the resin linkbar is used as the linkbar 33, structures of the keyboard substrate 32, the rebound component 312, and the keycap 311 in the keyboard apparatus 30 are not changed. Therefore, in this embodiment of this application, in addition to replacing a material of the linkbar 33, an objective of shock absorption and noise reduction is achieved without changing a structure of the keyboard apparatus 30. In addition, a linkbar process and assembly can be continuously produced and assembled, thereby improving assembly and production efficiency.

In this embodiment of this application, when the linkbar 33 is a resin linkbar, to meet requirements of high abrasion resistance, high toughness, and high rigidity of the linkbar 33, in this embodiment of this application, the linkbar 33 includes the following materials in parts by weight: 30 to 50 parts of carbon fibers, 20 to 40 parts of resin materials, 3 to 10 parts of reinforcement materials, 5 to 15 parts of abrasion-resistant agents, and 5 to 12 parts of adhesives.

The resin linkbar is prepared by using a material formed by mixing carbon fibers, resin materials, reinforcement materials, and adhesives, to meet the requirements of high abrasion resistance, high toughness, and high strength of the linkbar 33.

In this embodiment of this application, the resin materials are one or more of polyether ether nitrile, polyether ether ketone, polyimide, polycarbonate, fluorine-containing resin, and aromatic heterocyclic resin.

In this embodiment of this application, the carbon fibers are one or more of short carbon fibers, long carbon fibers, glass fibers, and carbon nanotubes.

In this embodiment of this application, the adhesives are one or more of an epoxy resin adhesive, an acrylic resin adhesive, a urea-formaldehyde resin adhesive, a polyimide adhesive, and a furan resin adhesive.

In this embodiment of this application, the reinforcement agents are one or more of carbon black, nano titanium powder, and nano zinc oxide.

In this embodiment of this application, the abrasion-resistant agents are one or more of polytetrafluoroethylene (PTFE), nylon, epoxy resin, and polyurea.

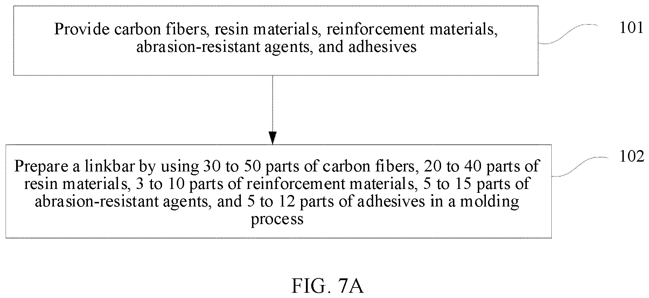

In this embodiment of this application, as shown in FIG. 7A, a preparation method of the linkbar 33 made of a resin material includes the following steps.

S101: Provide carbon fibers, resin materials, reinforcement materials, abrasion-resistant agents, and adhesives.

The carbon fibers may be one or more of short carbon fibers, long carbon fibers, glass fibers, and carbon nanotubes. The resin materials may be one or more of polyether ether nitrile, polyether ether ketone, polyimide, polycarbonate, fluorine-containing resin, and aromatic heterocyclic resin. The reinforcement materials may be carbon black, nano titanium powder, or nano zinc oxide. The abrasion-resistant agents may be one or more of polytetrafluoroethylene (PTFE), nylon, polyurea, and epoxy resin. The adhesives may be one or more of an epoxy resin adhesive, an acrylic resin adhesive, a urea-formaldehyde resin adhesive, and a furan resin adhesive.

S102: Prepare the linkbar by using 30 to 50 parts of carbon fibers, 20 to 40 parts of resin materials, 3 to 10 parts of reinforcement materials, 5 to 15 parts of abrasion-resistant agents, and 5 to 12 parts of adhesives in a molding process.

It should be noted that the molding process includes but is not limited to a molding process such as a mold pressing method, a hot pressing method, an extrusion method, an injection molding method, or a drawing method. In this embodiment of this application, 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives are mixed and hot-pressed, and a material obtained after hot-pressing molding is bent or polished to obtain the linkbar 33.

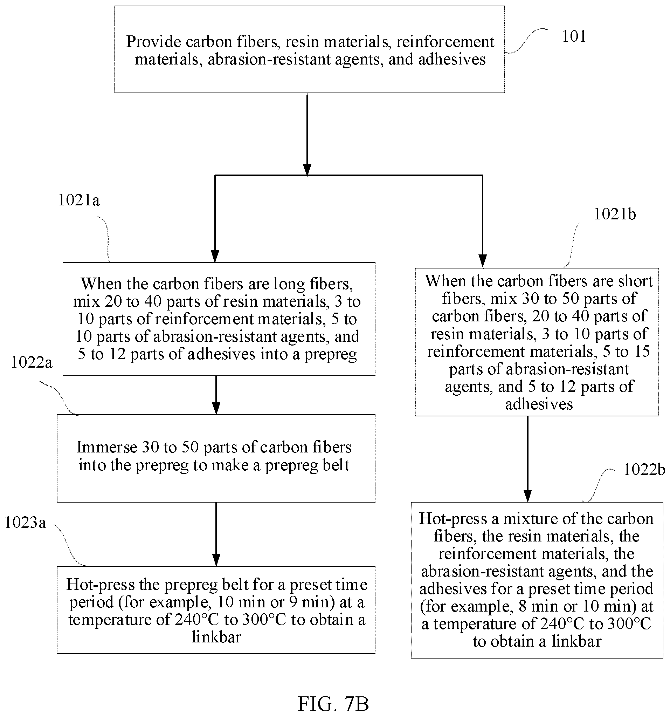

In this embodiment of this application, when the carbon fibers are long fibers, a prepreg method is used for preparation. For example, as shown in FIG. 7B, the foregoing step S102 may include the following steps.

S1021a: When the carbon fibers are long fibers, mix 20 to 40 parts of the resin materials, 3 to 10 parts of the reinforcement materials, 5 to 10 parts of the abrasion-resistant agents, and 5 to 12 parts of the adhesives to prepare a prepreg.

S1022a: Immerse 30 to 50 parts of the carbon fibers into the prepreg to make a prepreg belt.

S1023a: Hot-press the prepreg belt for a preset time period (for example, 10 min or 9 min) at a temperature of 240°C to 300°C to obtain the linkbar.

When the carbon fibers are long fibers, as shown in FIG. 7B, the foregoing step S102 may include the following steps.

S1021b: When the carbon fibers are short fibers, mix 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives.

S1022b: Hot-press a mixture of the carbon fibers, the resin materials, the reinforcement materials, the abrasion-resistant agents, and the adhesives for a preset time period (for example, 8 min or 10 min) at a temperature of 240°C to 300°C to obtain the linkbar.

The following describes preparation of the resin linkbar by using several embodiments.

### Embodiment 1

35 parts of polyether ether ketone resin materials, 3 parts of carbon black reinforcement agents, 10 parts of polyimide adhesive materials, 10 parts of polytetrafluoroethylene (PTFE) abrasion-resistant agents, and 42 parts of short carbon fibers are fully mixed, and are taken out through hot-pressing molding for 8 minutes at 260°C to obtain a linkbar 33.

It should be noted that in some other embodiments, in addition to hot pressing, a molding process includes but is not limited to a molding process such as a mold pressing method, an extrusion method, an injection molding method, or a drawing method.

According to a test, when the resin linkbar prepared by using the foregoing components in this embodiment of this application is used in an electronic device 100, compared with a conventional stainless steel linkbar 33, collision noise is reduced by 5.1 dB. A bending modulus of the linkbar 33 is 35 GPa.

### Embodiment 2

35 parts of polycarbonate plastic particles, 5 parts of carbon black reinforcement agents, 5 parts of polyimide adhesive materials, and 15 parts of polytetrafluoroethylene (PTFE) abrasion-resistant agent components are mixed to prepare a prepreg. 40 parts of long carbon fibers are fully immersed into the foregoing slurry to make a prepreg belt, which is taken out through hot-pressing molding for 10 minutes at 280°C to obtain a linkbar 33.

According to a test, when the resin linkbar provided in this embodiment of this application is used in an electronic device 100, compared with a conventional stainless steel linkbar 33, collision noise is reduced by 5.5 dB in a use process of the resin linkbar provided in this embodiment of this application. A bending modulus of the linkbar 33 is 113 GPa.

### Embodiment 3

30 parts of polyether ether ketone resin materials, 5 parts of carbon black reinforcement agents, 10 parts of polyimide adhesive materials, and 15 parts of polytetrafluoroethylene (PTFE) abrasion-resistant agent components are mixed to prepare a prepreg. 40 parts of long carbon fibers are fully immersed into the foregoing slurry to make a prepreg belt, which is taken out through hot-pressing molding for 10 minutes at 260°C to obtain a linkbar 33.

According to a test, when the resin linkbar provided in this embodiment of this application is used in an electronic device 100, compared with a conventional stainless steel linkbar 33, collision noise is reduced by 5.8 dB in a use process of the resin linkbar provided in this embodiment of this application. A bending modulus of the linkbar 33 is 126 GPa.

### Embodiment 4

35 parts of polycarbonate resin materials, 5 parts of silica reinforcement agents, 8 parts of epoxy adhesive materials, and 15 parts of polytetrafluoroethylene (PTFE) abrasion-resistant agent components are mixed to prepare a prepreg. 37 parts of long carbon fibers are fully immersed into the foregoing slurry to make a prepreg belt, which is taken out through hot-pressing molding for 12 minutes at 260°C to obtain a linkbar 33.

According to a test, when the resin linkbar provided in this embodiment of this application is used in an electronic device 100, compared with a conventional stainless steel linkbar 33, collision noise is reduced by 4.9 dB in a use process of the resin linkbar provided in this embodiment of this application. A bending modulus of the linkbar 33 is 94 GPa.

### Embodiment 5

40 parts of polycarbonate resin materials, 5 parts of silica reinforcement agents, 10 parts of polyimide adhesive materials, and 15 parts of PTFE abrasion-resistant agent components are mixed to prepare a prepreg. 40 parts of long carbon fibers are fully immersed into the foregoing slurry to make a prepreg belt, which is taken out through hot-pressing molding for 8 minutes at 300°C to obtain a linkbar 33.

According to a test, when the resin linkbar provided in this embodiment of this application is used in an electronic device 100, compared with a conventional stainless steel linkbar 33, collision noise is reduced by 5.2 dB in a use process of the resin linkbar provided in this embodiment of this application. A bending modulus of the linkbar 33 is 89 GPa.

### Embodiment 6

35 parts of polyether ether ketone resin materials, 3 parts of carbon black reinforcement agents, 12 parts of polyimide adhesive materials, 12 parts of nylon abrasion-resistant agents, and 38 parts of short carbon fibers are fully mixed, and are taken out through hot-pressing molding for 10 minutes at 260°C to obtain a linkbar 33.

According to a test, when the resin linkbar provided in this embodiment of this application is used in an electronic device 100, compared with a conventional stainless steel linkbar 33, collision noise is reduced by 5.0 dB in a use process of the resin linkbar provided in this embodiment of this application. A bending modulus of the linkbar 33 is 37 GPa.

### Test cases

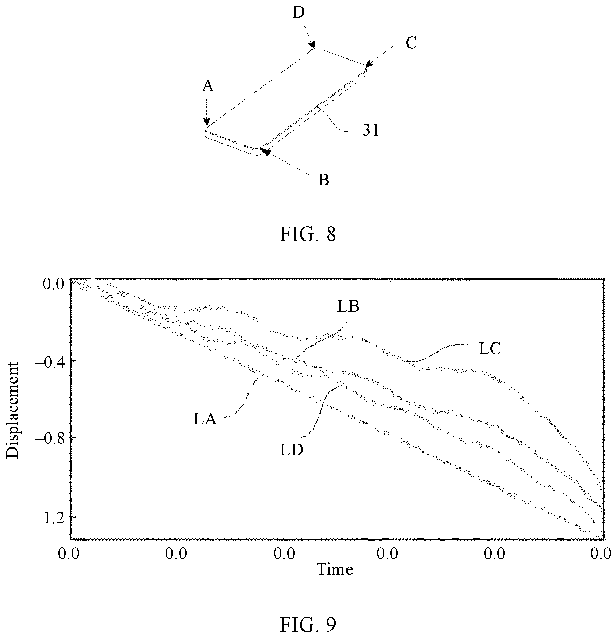

The linkbar 33 obtained in Embodiment 3 is used in a keyboard apparatus 30, and downward action force is exerted on one point of four points, for example, A, B, C, and D shown in FIG. 8, on a key 31 (for example, the Enter key 31b in FIG. 3) that includes the linkbar, and decreasing displacements of the other three points are detected. For example, in this embodiment of this application, the downward action force is exerted on the point A. Because action force exerted on the key 31 is usually instantaneous when a finger taps the keyboard, in FIG. 9 to FIG. 13, a time change in a horizontal coordinate is 0, and a vertical coordinate is a decreasing displacement.

FIG. 9 shows decreasing curves corresponding to A, B, C, and D after action force is exerted on point A on a key 31 in which a resin linkbar is used. LA is a decreasing curve at point A when downward action force is exerted on point A on the key 31 in which the resin linkbar is used, LB is a decreasing curve at point B when the downward action force is exerted on point A on the key 31 in which the resin linkbar is used, LC is a decreasing curve at point C when the downward action force is exerted on point A on the key 31 in which the resin linkbar is used, and LD is a decreasing curve at point D when the downward action force is exerted on point A on the key 31 in which the resin linkbar is used.

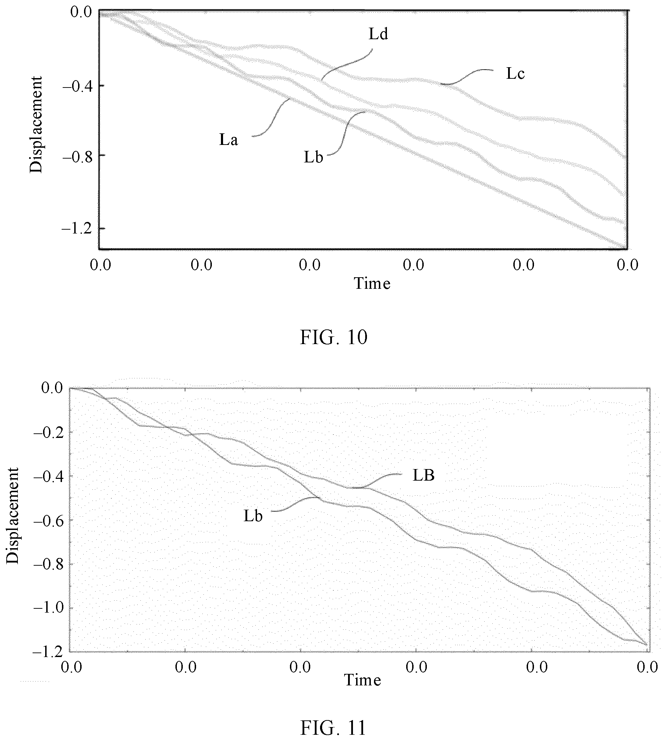

FIG. 10 are decreasing curves corresponding to A, B, C, and D after action force is exerted on point A on an existing key 31 in which a stainless steel linkbar 33 is used. La is a decreasing curve at point A when downward action force is exerted on point A on the key 31 in which the stainless steel linkbar 33 is used, Lb is a decreasing curve at point B when the downward action force is exerted on point A on the key 31 in which the stainless steel linkbar 33 is used, Lc is a decreasing curve at point C when the downward action force is exerted on point A on the key 31 in which the stainless steel linkbar 33 is used, and Ld is a decreasing curve at point D when the downward action force is exerted on point A on the key 31 in which the stainless steel linkbar 33 is used.

As shown in FIG. 9, when the action force is exerted on point A, point B, point C, and point D all maintain a descending trend with point A, and are basically consistent with curves in FIG. 10. Therefore, compared with FIG. 10, the resin linkbar provided in this embodiment of this application can implement synchronous falling of positions of the key 31.

FIG. 11 shows decreasing curves of keys 31 corresponding to the resin linkbar and the stainless steel linkbar 33 at point B after the action force is exerted on point A. It can be seen from FIG. 10 that, when the action force is exerted on point A, the keys 31 corresponding to the resin linkbar and the stainless steel linkbar 33 both maintain a descending trend at point B, and the descending trend of the curve LB is basically consistent with that of the curve Lb.

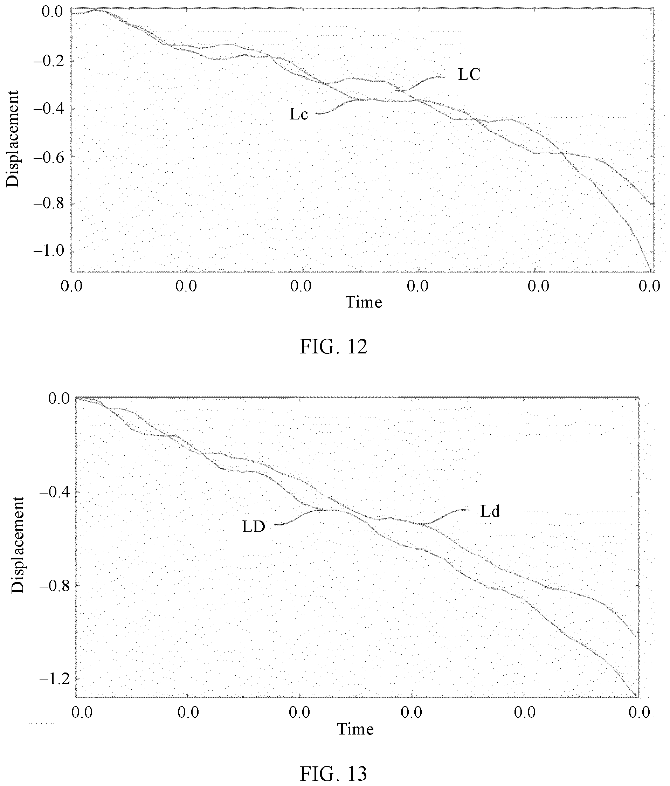

FIG. 12 shows decreasing curves of the keys 31 corresponding to the resin linkbar and the stainless steel linkbar 33 at point C after the action force is exerted on point A. It can be seen from FIG. 11 that, when the action force is exerted on point A, the keys 31 corresponding to the resin linkbar and the stainless steel linkbar 33 both maintain a descending trend at point C, and the descending trend of the curve LC is basically consistent with that of the curve Lc.

FIG. 13 shows decreasing curves of the keys 31 corresponding to the resin linkbar and the stainless steel linkbar 33 at point D after the action force is exerted on point A. It can be seen from FIG. 11 that, when the action force is exerted on point A, the keys 31 corresponding to the resin linkbar and the stainless steel linkbar 33 both maintain a descending trend at point D, and the descending trend of the curve LD is basically consistent with that of the curve Ld.

In conclusion, according to an electronic device 100 provided in this embodiment of this application, a resin linkbar is used in a large-sized key 31, to achieve a function of keyboard shock absorption and noise reduction, and resolve a problem of keyboard noise and resonance noise that are generated when a stainless steel linkbar 33 collides with an inner wall of an assembly groove 321a (321b). In addition, a weight of the resin linkbar is lower than that of stainless steel. Therefore, an overall weight of a keyboard is reduced, which facilitates a light weight of the electronic device 100.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For persons of ordinary skill in the art, specific meanings of the foregoing terms in embodiments of this application may be understood based on a specific situation.

In the specification, claims, and accompanying drawings of embodiments of this application, the terms "first", "second", "third", "fourth", and so on (if existent) are intended to distinguish between similar objects but do not necessarily indicate a specific order or sequence.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An electronic device, comprising at least a keyboard apparatus, wherein the keyboard apparatus comprises a keyboard substrate and a plurality of keys disposed on the keyboard substrate;
each key comprises: a keycap and at least one rebound component, wherein the rebound component is separately connected to the keycap and the keyboard substrate;
at least some keys in the plurality of keys further comprise at least one linkbar, wherein two ends of each linkbar are respectively rotatably connected to assembly grooves provided on the keyboard substrate, and the linkbar is rotatably connected to the keycap; and
the linkbar is a resin linkbar.

2. The electronic device according to claim 1, wherein the resin linkbar comprises the following materials in parts by weight: 30 to 50 parts of carbon fibers, 20 to 40 parts of resin materials, 3 to 10 parts of reinforcement materials, 5 to 15 parts of abrasion-resistant agents, and 5 to 12 parts of adhesives.

3. The electronic device according to claim 2, wherein the resin materials are one or more of polyether ether nitrile, polyether ether ketone, polyimide, polycarbonate, fluorine-containing resin, and aromatic heterocyclic resin.

4. The electronic device according to claim 2 or 3, wherein the carbon fibers are one or more of short carbon fibers, long carbon fibers, glass fibers, and carbon nanotubes.

5. The electronic device according to any one of claims 2 to 4, wherein the adhesives are one or more of an epoxy resin adhesive, an acrylic resin adhesive, a polyimide adhesive, a urea-formaldehyde resin adhesive, and a furan resin adhesive.

6. The electronic device according to any one of claims 2 to 5, wherein the reinforcement agents are one or more of carbon black, nano titanium powder, and nano zinc oxide.

7. The electronic device according to any one of claims 2 to 6, wherein the abrasion-resistant agents are one or more of polytetrafluoroethylene PTFE, nylon, polyurea, and epoxy resin.

8. A linkbar preparation method, wherein the method comprises:
providing carbon fibers, resin materials, reinforcement materials, abrasion-resistant agents, and adhesives; and
preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process.

9. The preparation method according to claim 8, wherein when the carbon fibers are long fibers, the preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process comprises:
mixing 20 to 40 parts of the resin materials, 3 to 10 parts of the reinforcement materials, 5 to 15 parts of the abrasion-resistant agents, and 5 to 12 parts of the adhesives to prepare a prepreg;
immersing 30 to 50 parts of the carbon fibers into the prepreg to make a prepreg belt; and
hot-pressing the prepreg belt for a preset time period at a temperature of 240°C to 300°C to obtain the linkbar.

10. The preparation method according to claim 8, wherein when the carbon fibers are short fibers, the preparing a linkbar by using 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives in a molding process comprises:
mixing 30 to 50 parts of the carbon fibers, 20 to 40 parts of the resin materials, 3 to 10 parts of the reinforcement materials, 5 to 15 parts of the abrasion-resistant agents, and 5 to 12 parts of the adhesives; and
hot-pressing a mixture of the carbon fibers, the resin materials, the reinforcement materials, the abrasion-resistant agents, and the adhesives for a preset time period at a temperature of 240°C to 300°C to obtain the linkbar.

11. A linkbar prepared by using the preparation method according to any one of claims 8 to 10.

12. A program product, wherein the program product comprises a computer program, the computer program is stored in a readable storage medium, at least one processor of a communication apparatus can read the computer program from the readable storage medium, and the at least one processor executes the computer program to enable the communication apparatus to implement the method according to any one of claims 8 to 10.
